# DEMANDE DE BREVET EUROPEEN

(11) **EP 4 804 462 A1**
(43) Date de publication de la demande: **09.09.2026**
(21) Numéro de dépôt: 26157413.1
(22) Date de dépôt: 10.02.2026
(51) Int. Cl.: H04L 9/40

(54) **PROCÉDÉ DE DÉLÉGATION D'UN TRAITEMENT D'AU MOINS UN FLUX DE DONNÉES ASSOCIÉ À UNE COMMUNICATION NUMÉRIQUE À UN AGENT INTELLIGENT**

(30) Priorité: 07.03.2025 FR 2502317
(71) Demandeur: Orange, 92130 Issy-les-Moulineaux (FR)
(72) Inventeur: FIEAU, Frédéric, 92326 CHATILLON (FR); FROMENTOUX, Gaël, 92326 CHATILLON (FR)
(74) Mandataire: Vidon Brevets & Stratégie

(57) **Abrégé**

L'invention se rapporte à un procédé de délégation, à un agent intelligent (AI), d'un traitement d'au moins un flux de données associé à au moins une communication numérique faisant intervenir un dispositif communicant (DC). Un tel procédé comprend, préalablement audit traitement, l'établissement, par un composant de contrôle de délégation (CCD), d'un contrat intelligent (CI) liant ledit dispositif communicant et ledit agent intelligent pour la mise en œuvre de ladite délégation, ledit contrat intelligent comprenant au moins un paramètre représentatif d'une clause associée à ladite délégation.

## Description

### Domaine technique

L'invention se situe dans le domaine de l'intelligence artificielle, et plus particulièrement dans celui des communications numériques assistées par une intelligence artificielle générative.

### Art antérieur

Un champ d'application particulièrement développé de l'intelligence artificielle, et en plein essor, est celui des agents intelligents, par exemple des agents conversationnels, en charge de fournir une assistance dans le traitement de flux de données associés à des communications numériques variées. De telles communications numériques ne sont pas limitées à des interactions entre un humain et un agent intelligent, mais englobent également des communications d'agent à agent, d'entités logicielles non dotées d'intelligence artificielle à agent, etc.

Dans ce contexte où les agents intelligents sont de plus en plus nombreux et perfectionnés, on constate également une spécialisation de plus en plus marquée de certains de ces agents. Ainsi, une requête particulière soumise dans le cadre d'une communication numérique est susceptible de trouver une réponse plus appropriée selon qu'elle est traitée par un agent intelligent plutôt qu'un autre, en fonction du domaine et/ou de l'application sur lequel porte la communication numérique par exemple. Certains agents intelligents sont également capables de traiter certaines requêtes plus rapidement que d'autres, ou en plus grand volume.

On comprend dès lors l'intérêt du développement de mécanismes de délégation, permettant d'orienter le traitement de flux de données associés à une communication numérique vers un agent intelligent identifié comme bien adapté pour les traiter de manière efficace et satisfaisante, ou selon tout autre critère d'intérêt pour le délégant.

Les systèmes de délégation existants sont toutefois encore rudimentaires, et présentent de nombreuses limites. Plus particulièrement, ils ne permettent pas d'établir, notamment de manière dynamique, de délégation de responsabilité d'une entité morale (par exemple d'un utilisateur humain, d'un administrateur, d'une entreprise) à un agent intelligent. Ils n'offrent pas non plus de mécanismes de certification de la délégation, au regard par exemple de sa conformité à différents critères de forme et/ou de fond, ni de moyens simples de rompre une délégation si ces critères ne sont pas ou plus respectés. Les systèmes de délégation existants ne permettent par ailleurs pas de prendre en compte une évolution dynamique des conditions de délégation et d'usages, alors même que le fournisseur d'un agent intelligent est généralement constamment soumis à des conditions techniques et réglementaires changeantes.

Il existe donc un besoin pour une solution permettant non seulement de définir un cadre lors de l'établissement d'une délégation de traitement de flux de données associés à des communications numériques à un agent intelligent, mais également de fournir à différents acteurs des moyens permettant de veiller au respect de ce cadre.

### Résumé de l'invention

La présente invention propose une solution visant à remédier à certains inconvénients de l'art antérieur. Selon un aspect, la présente invention se rapporte en effet à un procédé de délégation, à un agent intelligent, d'un traitement d'au moins un flux de données associé à au moins une communication numérique faisant intervenir un dispositif communicant. Un tel procédé comprend, préalablement audit traitement, l'établissement, par un composant de contrôle de délégation, d'un contrat intelligent liant ledit dispositif communicant et ledit agent intelligent pour la mise en œuvre de ladite délégation, ledit contrat intelligent comprenant au moins un paramètre représentatif d'une clause associée à ladite délégation.

De cette manière, la délégation du traitement de flux de données associés à des communications numériques est régie par un contrat intelligent, c'est-à-dire par au moins un protocole informatique configuré pour vérifier de façon continue, automatique et dynamique un ensemble de conditions dans lesquelles la délégation doit être opérée. Ainsi, on dispose de mécanismes permettant de caractériser, c'est-à-dire de rendre tangible notamment d'un point de vue juridique et d'un point de vue technique, une délégation de responsabilité d'une entité à un agent intelligent. Par ailleurs, via l'établissement d'un tel contrat intelligent, la prise en compte de toute évolution souhaitée ou nécessaire des conditions de délégation - par exemple du fait d'un changement de réglementation - est facilitée et peut être mise en œuvre de manière dynamique, et la conformité de la délégation à différents critères de forme et de fond peut être établie à tout moment. Le procédé permet ainsi à un dispositif communicant, tel qu'un terminal par exemple de type mobile, un routeur, ou un serveur applicatif, de pouvoir faire effectuer un ou plusieurs traitements à un ou plusieurs agents intelligent, et consécutivement de pouvoir enrichir les capacités de traitement du dispositif communicant sans recourir à des capacités ou des moyens supplémentaires sur le dispositif communicant. L'établissement du contrat intelligent permet de s'assurer que le traitement des données du flux sera exécuté de façon conforme aux clauses du contrat notamment en termes de qualité de service, de sécurité et de conformité protocolaire. L'agent intelligent peut être administré par un même gestionnaire ou un gestionnaire distinct du dispositif communicant et du composant de contrôle de délégation.

Dans un mode de réalisation particulier, ledit au moins un paramètre représentatif d'une clause associée à ladite délégation appartient au groupe de paramètres comprenant :
- une information représentative d'une durée de validité de ladite délégation ;
- au moins une information associée audit dispositif communicant ;
- au moins une information associée audit agent intelligent ;
- au moins un domaine associé à ladite délégation ;
- une information représentative d'un niveau de droit associé à ladite délégation ;
- au moins un type de donnée autorisé dans le cadre du traitement dudit au moins un flux de données associé à ladite communication numérique ;
- au moins un type d'interface autorisé dans le cadre du traitement dudit au moins un flux de données associé à ladite communication numérique ;
- un nombre maximal de requêtes de traitement délégables audit agent intelligent sur une unité de temps donnée ;
- une information représentative d'un coût cumulé maximal associé à ladite délégation ;
- une information représentative d'une autorisation ou d'une interdiction de sous-délégation ;
- un niveau de profondeur de sous-délégation autorisé.

De cette manière, le cadre à respecter pour la mise en œuvre d'une délégation de traitement selon la présente technique peut être défini de manière détaillée et prendre en compte une grande variété d'aspects, intégrant notamment des conditions sur certaines caractéristiques attendues du dispositif communicant délégant, de l'agent intelligent délégataire, des conditions sur la nature et les modalités de traitement des flux de données (domaine technique associé, type de données à traiter dans le cadre de la délégation, interfaces autorisées, permission de sous-délégation, qualité de service requise, niveau de sécurité, protocole requis pour le traitement, etc.), des conditions d'arrêt de la délégation à l'atteinte de certains seuils (par exemple un nombre maximal de requêtes délégables, une borne supérieure d'une fonction de coût prédéterminée, etc.). L'intégration de ces conditions sous forme de clauses d'un contrat intelligent facilite par ailleurs leur gestion ultérieure (évolution, contrôle par différents acteurs, révocation, etc.).

Dans un mode de réalisation particulier, ledit établissement du contrat intelligent comprend :
- la réception, en provenance dudit dispositif communicant, d'une demande d'établissement d'une délégation de traitement, ladite demande comprenant au moins un paramètre représentatif d'un périmètre de délégation souhaité ;
- la transmission, audit agent intelligent, de ladite demande d'établissement d'une délégation de traitement ;
- la réception, en provenance dudit agent intelligent, d'une réponse à ladite demande d'établissement d'une délégation de traitement ;
- la génération dudit contrat intelligent sur la base d'au moins un dudit au moins un paramètre représentatif d'un périmètre de délégation souhaité, lorsque ladite réponse est positive.

De cette manière, le composant de contrôle de délégation se charge de relayer une demande de délégation auprès d'un agent intelligent susceptible d'accepter de devenir délégataire d'un dispositif communicant, de recueillir la réponse de cet agent intelligent, et d'établir le cas échéant un contrat intelligent liant ces deux entités, en cas d'entente sur un périmètre de délégation accepté par ces deux parties.

Dans un mode de réalisation particulier, ledit agent intelligent est préalablement sélectionné parmi une pluralité d'agents intelligents candidats, en fonction dudit au moins un paramètre représentatif d'un périmètre de délégation souhaité.

De cette manière, l'agent intelligent sollicité pour faire office de délégataire en réponse à une demande de délégation particulière est choisi parmi un ensemble d'agents intelligents disponibles, sur la base par exemple d'une connaissance de son aptitude ou de son efficacité à traiter des flux de données conformément à tout ou partie de critères souhaités par le dispositif communicant délégant pour la mise en œuvre d'une telle délégation. Cela permet de pouvoir recourir à des agents intelligents « experts » pour certains traitements et de pouvoir faire évoluer une architecture pour enrichir et développer des traitements sans recourir à des modifications des dispositifs communicants.

Dans un mode de réalisation particulier, ladite réponse prend la forme d'une confirmation que ladite délégation est réalisable par ledit agent intelligent sur au moins une partie dudit périmètre de délégation souhaité, dite périmètre de délégation applicable, et ladite réponse comprend au moins un paramètre représentatif dudit périmètre de délégation applicable.

De cette manière, l'agent intelligent peut indiquer au composant de contrôle de délégation dans quelle mesure il est apte à mettre en œuvre la délégation. Plus particulièrement, un agent intelligent peut notamment proposer une mise en œuvre de la délégation sur un périmètre plus restreint que celui initialement souhaité par le dispositif communicant, mais qui peut néanmoins être d'intérêt pour ce dispositif communicant, notamment si aucun agent intelligent n'a été identifié comme étant en mesure de mettre en œuvre la délégation sur l'intégralité du périmètre de délégation souhaité. A titre d'exemple et de façon non exhaustive, l'agent intelligent peut proposer un niveau de sécurité réduit ou une performance de codage moins performante pour le traitement du flux de données pour des raisons de capacités de l'agent ou de rapidité de traitement du flux par l'agent.

Dans un mode de réalisation particulier, ledit établissement du contrat intelligent comprend en outre, préalablement à ladite génération dudit contrat intelligent, lorsque que ledit périmètre de délégation applicable est différent dudit périmètre de délégation souhaité :
- la transmission, audit dispositif communicant, d'une demande de confirmation d'établissement d'une délégation de traitement sur ledit périmètre de délégation applicable, ladite demande de confirmation comprenant ledit au moins un paramètre représentatif du périmètre de délégation applicable ;
- la réception, en provenance dudit dispositif communicant, d'une réponse à ladite demande de confirmation d'établissement d'une délégation de traitement sur ledit périmètre de délégation applicable.

De cette manière, une proposition, par un agent intelligent, d'une mise en œuvre d'une délégation sur un périmètre plus restreint ou différent de celui initialement demandé, est relayée au dispositif communicant afin que celui-ci soit en mesure de valider ou refuser que la délégation soit opérée dans ces conditions. Ainsi, un mécanisme de négociation est établi sous l'égide du composant de contrôle de délégation, afin de permettre au dispositif communicant et à l'agent intelligent sollicité de converger vers un périmètre de délégation acceptable pour ces deux parties.

Dans un mode de réalisation particulier, ledit contrat est généré sur la base dudit au moins un paramètre représentatif du périmètre de délégation applicable.

De cette manière, le contrat intelligent qui lie le dispositif communicant délégant et l'agent intelligent délégataire pour la mise en œuvre d'une délégation est établi sur la base des paramètres négociés entre ces deux entités.

Dans un mode de réalisation particulier, ledit au moins un paramètre représentatif d'un périmètre de délégation souhaité et ledit au moins un paramètre représentatif d'un périmètre de délégation applicable appartiennent audit groupe de paramètres.

De cette manière, les paramètres représentatifs de périmètres de délégation souhaité ou applicable peuvent être aisément être transposés en clauses d'un contrat intelligent liant le dispositif communicant délégant et l'agent intelligent délégataire pour la mise en œuvre de la délégation.

Dans un mode de réalisation particulier, ledit établissement du contrat intelligent comprend en outre l'obtention d'au moins un certificat numérique parmi un certificat numérique associé audit agent intelligent et un certificat numérique associé à audit dispositif communicant, et l'association dudit au moins un certificat numérique audit contrat intelligent.

De cette manière, des certificats numériques permettant d'identifier et prouver l'authenticité des entités en présence lors des opérations effectives de délégation de traitement de flux de données associés à des communications numériques sont disponibles, et associés au contrat intelligent établi pour régir ladite délégation, par exemple en tant que clauses de ce contrat.

Dans un mode de réalisation particulier, au moins un dudit au moins un certificat numérique est généré par une autorité de certification externe, sur requête dudit composant de contrôle de délégation.

De cette manière, une certification associée à une forte présomption de sécurité et de confiance - car délivrée par une autorité de certification externe - est disponible et peut être mise en œuvre notamment pour des niveaux de délégation considérés comme critiques ou d'importance.

Dans un mode de réalisation particulier, au moins un dudit au moins un certificat numérique est un certificat délégué généré par une entité parmi ledit dispositif communicant et ledit agent intelligent pour l'autre entité parmi ledit dispositif communicant et ledit agent intelligent.

De cette manière, on dispose de solutions de certification légères et peu complexes à mettre en œuvre dans la mesure où elles ne font pas intervenir d'autorités de certification externes, et qui sont à ce titre adaptées par exemple à des niveaux de délégation considérés comme moins critiques ou moins importants.

Dans un mode de réalisation particulier, ledit procédé de délégation comprend en outre, au niveau dudit composant de contrôle de délégation, postérieurement à l'établissement dudit contrat intelligent :
- l'obtention d'au moins un flux de données associé à une communication numérique initialement associée audit dispositif communicant, dite communication numérique courante ;
- la transmission, audit agent intelligent, dudit au moins un flux de données associé à ladite communication numérique courante, pour traitement dudit au moins un flux de données associé à ladite communication numérique courante dans le cadre de ladite délégation ;
- la réception, en provenance dudit agent intelligent, d'au moins une donnée traitée associée audit au moins un flux de données associé à ladite communication numérique courante ;
- la vérification d'une conformité de traitement dudit au moins un flux de données associé à ladite communication numérique courante, en fonction dudit au moins un paramètre représentatif d'une clause associée à ladite délégation.

De cette manière, la conformité de la manière dont un flux de données est traité par un agent intelligent délégataire dans le cadre d'une délégation opérée selon la présente technique est vérifiée systématiquement ou à tout le moins régulièrement au niveau du composant de contrôle de délégation. Une telle vérification peut être mise en œuvre à l'initiative du composant de contrôle de délégation, ou d'autres entités légitimes à accéder à de telles informations. Cette vérification permet de s'assurer du traitement par l'agent intelligent du flux de données et de vérifier si les conditions de la délégation et notamment si le paramètre représentatif de la clause de délégation a été respectée. Cette vérification permet en outre de pouvoir établir des niveaux de performance et de conformité des agents intelligents pouvant assurer des délégations de traitement.

Dans un mode de réalisation particulier, ledit procédé de délégation comprend, lorsque ladite vérification démontre une absence de conformité dudit traitement dudit au moins un flux de données associé à la communication numérique courante, la révocation dudit contrat intelligent.

De cette manière, il peut être mis fin de manière automatique à la délégation, lorsque des clauses du contrat intelligent ne sont pas respectées notamment par le dispositif communicant délégant ou par l'agent intelligent délégataire.

Dans un mode de réalisation particulier, ledit procédé de délégation comprend :
- l'obtention d'au moins une donnée représentative d'un coût cumulé associé à ladite délégation de traitement ;
- lorsque ledit coût cumulé est supérieur à un seuil déterminé, la révocation dudit contrat intelligent, et l'émission, à destination dudit dispositif communicant et/ou dudit agent intelligent, d'un message signifiant la fin de ladite délégation de traitement.

De cette manière, des conditions de fin de délégation peuvent avoir été prévues en marge du contrat intelligent, qui permettent de mettre un terme au processus de délégation lorsqu'un seuil de coût maximal autorisé pour l'ensemble des opérations de délégation réalisées est atteint ou dépassé.

Selon un autre aspect, la présente technique se rapporte à un composant de contrôle d'une délégation, à un agent intelligent, d'un traitement d'au moins un flux de données associé à au moins une communication numérique faisant intervenir un dispositif communicant. Ce composant comprend au moins un processeur configuré pour, préalablement audit traitement, établir un contrat intelligent liant ledit dispositif communicant et ledit agent intelligent pour la mise en œuvre de ladite délégation, ledit contrat intelligent comprenant au moins un paramètre représentatif d'une clause associée à ladite délégation.

Un tel composant de contrôle d'une délégation peut bien sûr présenter les différentes caractéristiques relatives au procédé de délégation selon l'invention, qui peuvent être combinées ou considérées isolément. Ainsi, les caractéristiques et avantages de ce dispositif sont les mêmes que ceux du procédé de délégation, à un agent intelligent, d'un traitement d'au moins un flux de données associé à au moins une communication numérique faisant intervenir un dispositif communicant, et ne sont pas détaillés plus amplement.

Selon un autre aspect, l'invention proposée se rapporte également à un produit programme d'ordinateur téléchargeable depuis un réseau de communication et/ou stocké sur un support lisible par ordinateur et/ou exécutable par un microprocesseur, comprenant des instructions de code de programme pour l'exécution d'au moins un procédé tel que décrit précédemment dans l'un quelconque de ses modes de réalisation, lorsque ce procédé est exécuté sur un ordinateur.

L'invention proposée vise également un support d'enregistrement lisible par un ordinateur sur lequel est enregistré un programme d'ordinateur comprenant des instructions de code de programme pour l'exécution des étapes d'un procédé tel que décrit précédemment, dans l'un quelconque de leurs modes de réalisation.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau, par exemple le réseau Internet.

Les différents modes de réalisation mentionnés ci-dessus sont combinables entre eux pour la mise en œuvre de l'invention.

### Figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
[Fig.1] illustre de manière schématique exemple d'environnement pour la mise en œuvre de la présente technique, dans un mode de réalisation particulier ;
[Fig.2] illustre de manière schématique, sous la forme d'un diagramme de séquence, les étapes d'un procédé de délégation dans un mode de réalisation particulier de la technique proposée ;
[Fig.3] décrit une architecture simplifiée d'un composant de contrôle de délégation, dans un mode de réalisation particulier de la technique proposée.

### Description détaillée de l'invention

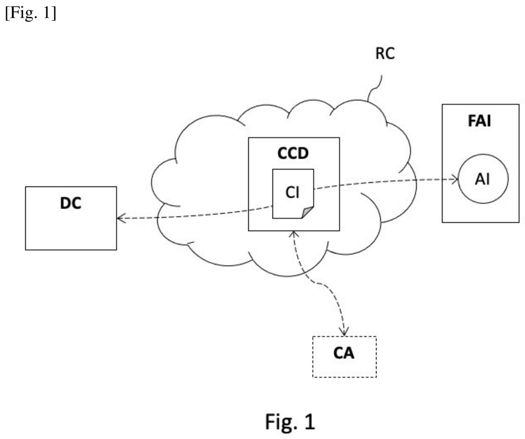

On décrit, en relation avec la [Fig.1], un exemple d'environnement dans lequel la présente technique est mise en œuvre, dans un mode de réalisation particulier. Un dispositif communicant DC est susceptible d'être sollicité dans le cadre du traitement d'au moins une communication numérique. Un tel dispositif communicant DC peut par exemple prendre la forme d'un terminal de communication (un smartphone, une tablette numérique, un ordinateur, etc.), d'un objet connecté, d'une passerelle résidentielle, d'un serveur, ou plus généralement de toute instance logicielle capable d'établir ou de recevoir des communications numériques. Dans ce contexte, il est proposé, selon un premier aspect, un procédé de délégation, à un agent intelligent AI accessible via un réseau de communication RC, d'un traitement d'au moins un flux de données associé à au moins une communication numérique faisant intervenir le dispositif communicant DC. Le recours à un tel agent intelligent AI, mis à disposition par un fournisseur de services FAI, peut avoir des raisons variées, par exemple diminuer la charge du dispositif communicant DC, ou encore bénéficier d'un traitement plus approprié des flux de données associés à une communication numérique en faisant appel à un agent intelligent spécialisé. Dans le cadre de la présente technique, les traitements et flux de données objets de la délégation peuvent être de natures très variées. Les traitements délégués peuvent par exemple comprendre, à titre purement illustratif et non limitatif, des opérations de routage d'un flux de données, d'enrichissement d'un flux de données, de filtrage d'un flux de données, de chiffrement ou déchiffrement d'un flux de données, d'extraction de données d'un flux de données, etc. Dans le domaine de la gestion des réseaux de communication, les flux de données concernés par la délégation de traitement peuvent par exemple comprendre des flux de données de contrôle (i.e. d'un plan de contrôle) permettant de gérer la manière dont des données utiles associées à une communication numérique (e.g. des données du plan de données) sont acheminées sur le réseau. De manière alternative ou complémentaire, des flux de données d'un plan de données peuvent également faire l'objet d'une délégation de traitement selon la présente technique.

Selon le principe général de la technique proposée, le procédé de délégation comprend, préalablement à la mise en œuvre de tels traitements, l'établissement, par un composant de contrôle de délégation CCD, d'un contrat intelligent CI (ou « *smart contract* » en anglais) liant le dispositif communicant DC et l'agent intelligent AI pour la mise en œuvre des opérations de délégation. Par « *contrat intelligent* », on entend un ensemble de programmes autonomes qui exécutent automatiquement les conditions et termes d'un contrat, sans nécessiter d'intervention humaine. En d'autres termes, un contrat intelligent est un programme informatique compilé qui porte un ensemble de caractéristiques lui permettant d'exécuter automatiquement et en autonomie au moins certaines des clauses spécifiques du contrat qu'il porte. De cette manière, avant toute délégation effective du traitement d'au moins un flux de données associé à une communication numérique, un cadre est fixé permettant de définir dans quelles conditions une telle délégation doit être opérée.

À cette fin, le contrat intelligent CI comprend au moins un paramètre représentatif d'une clause associée à ladite délégation. À titre purement illustratif et non limitatif, on présente ci-après des exemples de paramètres représentatifs de clauses qui peuvent être associées à une délégation, et qui représentent autant de conditions à respecter pour qu'une délégation soit considérée comme valide ou conforme. De tels paramètres comprennent par exemple :
- une information représentative d'un temps de validité de la délégation, par exemple sous la forme d'une durée, d'une date d'expiration ;
- au moins une information associée au dispositif communicant DC, autrement dit des informations sur des caractéristiques attendues concernant le délégant, par exemple sa localisation dans le réseau, sa nature, un identifiant associé, etc. ;
- au moins une information associée à l'agent intelligent AI, autrement dit des informations sur des caractéristiques attendues concernant le délégataire, par exemple sa localisation dans le réseau, sa nature, un identifiant associé, etc. ;
- au moins un domaine technique ou fonctionnel associé à la délégation (par exemple celui de la finance, de la mobilité, du commerce, des études, du sport, etc.) ;
- une information représentative d'un niveau de droit associé à la délégation, par exemple des données précisant si l'agent intelligent AI délégataire est uniquement limité à fournir de l'information, ou bien s'il est autorisé à accéder à certains systèmes et/ou bases de données en écriture pour effectuer de la mise à jour d'information ;
- au moins un type de donnée autorisé dans le cadre du traitement des flux de données associés à la communication numérique, par exemple un type de média (texte, vidéo, image, fichier particulier, etc.) qui peut être échangé ;
- au moins un type d'interface (entrée audio, caméra, capteurs divers) dont l'utilisation est autorisée dans le cadre du traitement des flux de données associés à la communication numérique ;
- un nombre maximal de requêtes de traitement délégables à l'agent intelligent sur une unité de temps donnée, par exemple un nombre maximal de requêtes délégables par seconde, par minute, par heure, par jour, ou sur l'ensemble de la durée de délégation ;
- une information représentative d'un coût cumulé maximal associé au processus de délégation dans son ensemble, permettant par exemple de mettre fin à la délégation lorsque ce coût est atteint ou dépassé ;
- une information représentative d'une autorisation ou d'une interdiction de sous-délégation, autrement dit une information précisant si un agent intelligent auquel est délégué le traitement des flux de données associés à d'une communication numérique est lui-même autorisé à sous-déléguer ce traitement à un autre agent intelligent ;
- un niveau de profondeur de sous-délégation autorisé, par exemple un nombre de sous-délégation autorisé pour le traitement d'un même flux de données associé à une communication numérique.

La liste précédente est non exhaustive, et d'autres paramètres peuvent faire office de clauses du contrat intelligent liant le dispositif communicant DC et un agent intelligent AI pour la mise en œuvre d'une délégation entre ces deux entités.

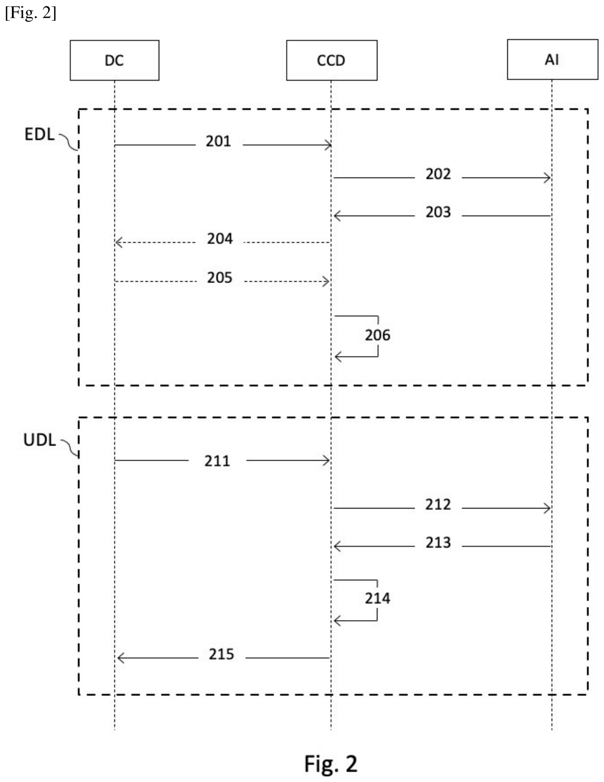

La [Fig.2] présente de manière détaillée les étapes d'établissement EDL d'un tel contrat intelligent CI par le composant de contrôle de délégation CCD, dans un mode de réalisation particulier.

Dans une étape 201, le composant de contrôle de délégation CCD reçoit, en provenance du dispositif communicant DC, une demande d'établissement d'une délégation de traitement, comprenant au moins un paramètre représentatif d'un périmètre de délégation souhaité par le dispositif communicant DC. Les paramètres représentatifs d'un périmètre de délégation souhaités sont par exemple du même type que ceux précédemment décrits en référence à des clauses possibles d'un contrat intelligent. Par cette demande de délégation, le dispositif communicant DC peut ainsi exprimer son souhait de déléguer le traitement de flux de données associés à des communications numériques et préciser les conditions dans lesquelles une telle délégation doit s'opérer. Le dispositif communicant DC peut ainsi indiquer que les communications numériques pour lesquelles il souhaite déléguer le traitement de flux de données associés sont celles relatives à un domaine particulier, une interface particulière, un média particulier, ou encore préciser une période de délégation souhaitée, un volume donné de requêtes à traiter, etc.

Dans une étape 202, le composant de contrôle de délégation CCD relaie cette demande de délégation à un agent intelligent AI. Un tel agent intelligent peut avoir été préalablement référencé au sein du composant de contrôle de délégation CCD. Selon une caractéristique particulière, l'agent intelligent est par exemple sélectionné parmi une pluralité d'agents intelligents candidats préalablement référencés au sein du composant de contrôle de délégation CCD, en fonction du ou des paramètres représentatifs du périmètre de délégation souhaité (et en tenant éventuellement compte d'autres critères fixés par exemple par le composant de contrôle de délégation). Ainsi, l'agent intelligent le plus à même de traiter correctement et efficacement des flux de données associés à des communications numériques sur le périmètre de délégation souhaité est par exemple sélectionné.

Dans une étape 203, le composant de contrôle de délégation CCD reçoit, en provenance de l'agent intelligent AI auquel la demande de délégation a été transmise en étape 202, une réponse à cette demande, qui peut être positive ou négative. Pour des raisons qui lui sont propres, par exemple lorsqu'il détermine ne pas être en mesure de réaliser une délégation de traitement sur le périmètre demandé par le dispositif communicant DC, l'agent intelligent peut opposer un refus à la demande de délégation. À l'inverse, en cas d'acceptation par l'agent intelligent AI d'être délégataire pour le traitement de flux de données associés à des communications numériques faisant intervenir le dispositif communicant DC, la réponse reçue par le composant de contrôle de délégation CDD en étape 203 prend par exemple la forme d'une confirmation que la délégation est réalisable par l'agent intelligent AI sur au moins une partie du périmètre de délégation souhaité, dit périmètre de délégation applicable. Dans l'éventualité où le périmètre de délégation applicable ne correspond pas exactement au périmètre de délégation souhaité, la confirmation de délégation reçue en étape 203 comprend au moins un paramètre représentatif de ce périmètre de délégation applicable. Dans ce cas, un nouvel échange d'informations est éventuellement réalisé entre le composant de contrôle de délégation CCD et le dispositif communicant DC, afin de s'assurer que le dispositif communicant DC maintient sa demande de délégation sur le périmètre de délégation applicable, potentiellement plus restreint que celui initialement souhaité.

Ainsi, dans le cadre d'un tel échange, le composant de contrôle de délégation CCD transmet par exemple au dispositif communicant DC, dans une étape 204, une demande de confirmation d'établissement d'une délégation de traitement sur le périmètre de délégation applicable. Cette demande de confirmation comprend le ou les paramètres représentatifs du périmètre de délégation applicable reçus en étape 203. À réception de cette demande, le dispositif communicant DC évalue dans quelle mesure la mise en œuvre de la délégation sur le périmètre de délégation applicable, autrement dit sur le périmètre de délégation proposé par l'agent intelligent AI, est acceptable. Une telle évaluation peut par exemple tenir compte d'une proportion de paramètres communs (ou conditions communes) indiqués comme vérifiables par l'agent intelligent AI, au regard d'une comparaison entre le périmètre de délégation souhaité et le périmètre de délégation applicable (autrement dit, l'évaluation tient alors compte d'un degré de proximité ou de recoupement entre le périmètre de délégation applicable et le périmètre de délégation souhaité). Une telle évaluation peut également, de manière alternative ou complémentaire, se baser sur une hiérarchie d'importance préétablie associées à certains paramètres représentatifs d'un périmètre de délégation (le périmètre de délégation applicable étant alors par exemple d'autant plus acceptable pour le dispositif communicant DC que des paramètres particuliers considérés comme prioritaires par ce dispositif sont indiqués comme vérifiables par l'agent intelligent AI, c'est-à-dire compris dans le périmètre de délégation applicable).

Dans une étape 205, le composant de contrôle de délégation CCD reçoit, en provenance du dispositif communicant DC, une réponse à la demande de confirmation d'établissement d'une délégation de traitement sur ledit périmètre de délégation applicable. Une telle réponse peut prendre la forme d'une acceptation de la mise en œuvre de la délégation sur le périmètre de délégation applicable, d'un refus de la mise en œuvre de la délégation sur le périmètre de délégation applicable, ou éventuellement d'une demande de délégation sur un périmètre de délégation souhaité modifié différent du périmètre de délégation applicable et du périmètre de délégation initialement souhaité (l'étape 205 présentant alors, par exemple, des caractéristiques similaires à celles de l'étape 201 précédemment décrite).

Dans le cadre de ce processus qui peut s'apparenter à un processus de négociation, plusieurs échanges d'informations entre le composant de contrôle de délégation CCD et le dispositif communicant DC d'une part, et entre le composant de contrôle de délégation CCD et l'agent intelligent AI d'autre part, peuvent être mis en œuvre le cas échéant, jusqu'à ce qu'un périmètre de délégation accepté de tous (composant de contrôle de délégation CCD, dispositif communicant DC et agent intelligent AI) soit identifié.

Dans une étape 206, une fois que le dispositif communicant DC et l'agent intelligent AI se sont entendus sur le périmètre de délégation applicable, le composant de contrôle de délégation CCD génère le contrat intelligent qui lie ces deux entités (dispositif communicant DC et agent intelligent AI) pour la mise en œuvre de la délégation de traitement. Plus particulièrement, les paramètres représentatifs du périmètre de délégation applicable sont traduits en paramètres représentatifs de clauses du contrat intelligent CI, associée à ladite délégation.

Dans un mode de réalisation particulier, l'établissement du contrat intelligent comprend également l'obtention d'un ou plusieurs certificats numériques, pouvant notamment comprendre au moins un certificat numérique associé à l'agent intelligent AI et/ou au moins un certificat numérique associé au dispositif communicant DC. Selon une caractéristique particulière, de tels certificats numériques - qui permettent par exemple par la suite de s'assurer de l'identité des entités en présence lors des opérations effectives de délégation de traitement de communications numériques - sont associés au contrat intelligent CI, par exemple en tant que clauses de ce contrat. La génération de ces certificats numériques peut être mis en œuvre par différents moyens.

Dans un mode de réalisation particulier, selon une première implémentation, au moins un de ces certificats numériques est généré par une autorité de certification externe (par exemple l'autorité de certification référencée CA sur la [Fig.1]), sur requête en ce sens du composant de contrôle de délégation CCD. Un protocole de gestion automatique de certificats courte durée, de type ACME-STAR (ACME faisant référence à « *Automated Certificate Management Environment* » en anglais, et STAR à l'extension « *Support for Short-Term, Automatically-Renewed* » de ce protocole), peut par exemple être utilisé dans ce cadre, permettant au composant de contrôle de délégation CCD de requérir auprès de l'autorité de certification externe CA l' établissement d'un certificat numérique à durée limitée pour le dispositif communicant DC et/ou l'agent intelligent AI, que ces derniers peuvent récupérer directement auprès de cette autorité une fois ces certificats générés.

De manière alternative ou complémentaire, selon une deuxième implémentation, au moins un de ces certificats numériques est un certificat délégué généré par une partie parmi ledit dispositif communicant et ledit agent intelligent pour l'autre partie parmi ledit dispositif communicant et ledit agent intelligent, selon des techniques connues en anglais sous le nom de « *delegated credentials* »*.*

Le choix entre l'une ou l'autre des deux implémentations précédemment décrites peut notamment être effectué sur en fonction d'un compromis visé entre sécurité et simplicité de mise en œuvre. Ainsi, l'utilisation de la méthode ACME-STAR, plus sécurisée dans la mesure où elle fait intervenir une autorité de certification externe, peut par exemple être privilégiée pour des délégations de premier niveau, c'est-à-dire les délégations directement établies entre le dispositif communicant et un premier agent intelligent. L'utilisation de l'autre méthode à base de certificats délégués, plus simple à mettre en œuvre dans la mesure où elle ne fait pas intervenir d'entités tierces (notamment pas d'autorité de certification externe), peut pour sa part être réservée à des délégations de niveaux plus profonds, autrement dit aux sous-délégations éventuellement autorisées et mises en œuvre par un agent intelligent déjà délégataire d'un dispositif communicant ou d'un autre agent intelligent, et qui souhaite lui-même sous-déléguer à d'autres agents intelligents le traitement de certaines communications numériques qui lui avait été directement ou indirectement confié.

Une fois le contrat intelligent CI établi entre le dispositif communicant DC et l'agent intelligent AI, cet agent peut être sollicité pour traiter des flux de données associés aux communications numériques déléguées. Une telle phase d'utilisation UDL de la délégation, qui fait suite à la phase initiale d'établissement ADL de la délégation via la génération d'un contrat intelligent, est également illustrée sur la [Fig.2], dans un mode de réalisation particulier.

Dans une étape 211, le composant de contrôle de délégation CCD obtient au moins un flux de données associé à une communication numérique initialement associée au dispositif communicant DC, dite communication numérique courante. Un tel flux de données correspond par exemple à un flux de données reçu par le dispositif communicant DC en provenance d'un dispositif tiers dans le cadre de la communication numérique courante, en vue d'un traitement par le dispositif communicant DC, et que le dispositif communicant DC redirige avant traitement vers le composant de contrôle de délégation CCD pour mise en œuvre de la délégation (cas de l'étape 211 illustrée sur la [Fig.2]) en vue du traitement par l'agent intelligent AI. De manière alternative (non illustrée sur la [Fig.2]), un tel flux de données émis par un dispositif tiers à destination du dispositif communicant DC pour traitement peut également être intercepté par le composant de contrôle de délégation CCD avant qu'il atteigne le dispositif communicant DC auquel il était initialement destiné. Selon encore une autre alternative, le flux de données obtenu en étape 211 peut également correspondre à un flux de données généré au niveau même du dispositif communicant DC dans le cadre de la communication numérique courante, par exemple pour initier une telle communication, et que le dispositif communicant DC relaie au composant de contrôle de délégation CCD en vue d'un traitement délégué à l'agent intelligent AI.

Dans une étape 212, le composant de contrôle de délégation CCD transmet le flux de données associé à la communication numérique courante à un agent intelligent en charge de la traiter, sur la base d'un contrat intelligent préétabli lors de la phase d'établissement EDL de la délégation entre le dispositif communicant DC et cet agent intelligent AI. Le composant de contrôle de délégation reçoit en provenance dudit agent intelligent AI, dans une étape 213, au moins une donnée traitée associée à ladite communication numérique courante. Une telle donnée traitée correspond au traitement du flux de données associé à la communication numérique courante, effectué par l'agent intelligent dans le cadre de la délégation.

Dans une étape 214, le composant de contrôle de délégation CCD procède à
une vérification d'une conformité de traitement du flux de données associé à la communication numérique courante au contrat intelligent CI. Plus particulièrement, une telle vérification est effectuée sur la base des paramètres représentatifs des clauses associées à ladite délégation. Une telle vérification peut être mise en œuvre à différents moments de la phase d'utilisation de la délégation, et à l'initiative non seulement du composant de contrôle de délégation CCD lui-même mais également d'autres entités (de contrôle, de régulation, etc.).

En cas de conformité du traitement du flux de données associé à la communication numérique courante au contrat intelligent CI, la donnée traitée reçue en étape 213 par le composant de contrôle de délégation CCD peut être par exemple être relayée au dispositif communicant DC, dans une étape 215, pour restitution à un utilisateur.

Selon une caractéristique particulière, lorsque la vérification effectuée en étape 214 démontre au contraire une absence de conformité du traitement du flux de données associé à la communication numérique courante aux clauses du contrat intelligent, la ou les clauses non respectées ou l'ensemble du contrat intelligent sont révoqués de manière automatique.

Dans un mode de réalisation particulier, des conditions de fin de délégation peuvent également avoir été prévues en marge du contrat intelligent. De telles conditions, implémentées au niveau du composant de contrôle de délégation CCD (par exemple au moment de l'établissement du contrat intelligent, éventuellement sur demande du dispositif communicant DC) comprennent par exemple la prise en compte d'une fonction de coût associé à la délégation, et permettent notamment de mettre un terme au processus de délégation lorsqu'un coût maximal autorisé pour l'ensemble des opérations de délégation réalisées est atteint ou dépassé.

Dans ce cadre, le composant de contrôle de délégation CCD obtient par exemple, lors de chaque sollicitation de l'agent intelligent délégataire pour traiter un flux de données associé à une communication numérique, au moins une donnée représentative d'un coût cumulé associé à la délégation de traitement. Une telle donnée est par exemple reçue en provenance du dispositif communicant DC, ou déterminée (e.g. calculée) par le composant de contrôle de délégation CCD. Selon une caractéristique particulière, un coût cumulé associé à la délégation est par exemple estimé en multipliant un nombre de jetons utilisés (ou « *token* ») par un coût unitaire fixé pour un jeton, une utilisation d'un ou plusieurs jetons correspondant à un ou plusieurs traitements de flux de données délégués à l'agent intelligent AI (le nombre de jetons utilisés pour un traitement pouvant notamment dépendre de la complexité du traitement délégué).

Le composant de contrôle de délégation détermine ensuite si ce coût cumulé est supérieur à un seuil déterminé. Dans la négative, le mécanisme de délégation tel que défini par le contrat intelligent CI reste activé, et l'agent intelligent AI peut à nouveau être sollicité en tant que délégataire pour le traitement de flux de données associés à des communications numériques impliquant le dispositif communicant DC. En revanche, lorsque le coût cumulé atteint ou dépasse le seuil de coût maximal autorisé, le composant de contrôle de délégation CCD met fin au processus de délégation : il procède alors par exemple à la révocation du contrat intelligent CI, et émet à destination du dispositif communicant DC et/ou de l'agent intelligent AI un message signifiant la fin de la délégation de traitement. L'agent intelligent AI ne peut alors plus être sollicité pour traiter des flux de données en tant que délégataire du dispositif communicant DC.

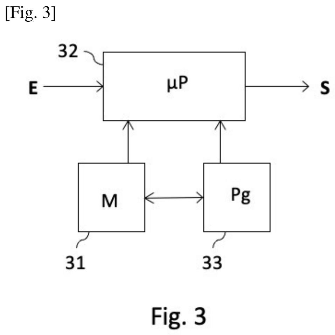

On présente maintenant, en relation avec la [Fig.3] la structure simplifiée d'un composant de contrôle de délégation, dans un mode de réalisation particulier de la technique proposée. Un tel composant de contrôle intervient pour la délégation à un agent intelligent d'un traitement d'au moins un flux de données associé à au moins une communication numérique faisant intervenir un dispositif communicant. Le composant de contrôle de délégation peut être hébergé au sein d'un dispositif autonome (par exemple un serveur) indépendant de ceux qui hébergent les agents intelligents délégataires. De manière alternative, dans un autre mode de réalisation particulier, il peut également être intégré directement au sein d'un dispositif qui met également en œuvre un ou plusieurs agents intelligents susceptible d'être sollicités dans le cadre d'une demande de délégation.

Le composant de contrôle de délégation, selon la technique proposée, comprend par exemple une mémoire 31 constituée d'une mémoire tampon M, une unité de traitement 32, équipée par exemple d'un microprocesseur µP, et pilotée par le programme d'ordinateur Pg 33, mettant en œuvre des étapes du procédé de délégation selon au moins un mode de réalisation de l'invention.

À l'initialisation, les instructions de code du programme d'ordinateur 33 sont chargées dans la mémoire tampon avant d'être exécutées par le processeur de l'unité de traitement 32.

L'unité de traitement 32 reçoit en entrée E par exemple une demande d'établissement d'une délégation de traitement de flux de données associés des communications numériques, en provenance d'un dispositif communicant. Une telle demande comprend par exemple un ou plusieurs paramètres représentatifs d'un périmètre de délégation souhaité. Le microprocesseur de l'unité de traitement 32 réalise alors les étapes du procédé délégation, selon les instructions du programme d'ordinateur 33. Plus particulièrement, l'unité de traitement 32 identifie un agent intelligent susceptible d'agir en tant que délégataire pour le traitement de flux de données associés à des communications numériques faisant intervenir le dispositif communicant, et relaie la demande de délégation à cet agent intelligent. L'unité de traitement 32 agit en tant qu'intermédiaire de négociation entre le dispositif communicant et l'agent intelligent, pour la détermination d'un périmètre de délégation applicable pour la mise en œuvre d'une délégation de traitement. Une fois un tel périmètre établi, l'unité de traitement génère et délivre en sortie S au moins un contrat intelligent liant le dispositif communicant et l'agent intelligent identifié pour la mise en œuvre de ladite délégation, selon au moins un des modes de réalisation précédemment décrits.

## Revendications

1. Procédé de délégation, à un agent intelligent (AI), d'un traitement d'au moins un flux de données associé à au moins une communication numérique faisant intervenir un dispositif communicant (DC), ledit procédé étant **caractérisé en ce qu'**il comprend, préalablement audit traitement, l'établissement, par un composant de contrôle de délégation (CCD), d'un contrat intelligent (CI) liant ledit dispositif communicant et ledit agent intelligent pour la mise en œuvre de ladite délégation, ledit contrat intelligent comprenant au moins un paramètre représentatif d'une clause associée à ladite délégation.

2. Procédé de délégation selon la revendication 1, **caractérisé en ce que** ledit au moins un paramètre représentatif d'une clause associée à ladite délégation appartient au groupe de paramètres comprenant :
- une information représentative d'une durée de validité de ladite délégation ;
- au moins une information associée audit dispositif communicant ;
- au moins une information associée audit agent intelligent ;
- au moins un domaine associé à ladite délégation ;
- une information représentative d'un niveau de droit associé à ladite délégation ;
- au moins un type de donnée autorisé dans le cadre du traitement dudit au moins un flux de données associé à ladite communication numérique ;
- au moins un type d'interface autorisé dans le cadre du traitement dudit au moins un flux de données associé à ladite communication numérique ;
- un nombre maximal de requêtes de traitement délégables audit agent intelligent sur une unité de temps donnée ;
- une information représentative d'un coût cumulé maximal associé à ladite délégation ;
- une information représentative d'une autorisation ou d'une interdiction de sous-délégation ;
- un niveau de profondeur de sous-délégation autorisé.

3. Procédé de délégation selon l'une quelconque des revendications précédentes, **caractérisé en ce que** ledit établissement du contrat intelligent comprend :
- la réception (201), en provenance dudit dispositif communicant, d'une demande d'établissement d'une délégation de traitement, ladite demande comprenant au moins un paramètre représentatif d'un périmètre de délégation souhaité ;
- la transmission (202), audit agent intelligent, de ladite demande d'établissement d'une délégation de traitement ;
- la réception (203), en provenance dudit agent intelligent, d'une réponse à ladite demande d'établissement d'une délégation de traitement ;
- la génération (206) dudit contrat intelligent sur la base d'au moins un dudit au moins un paramètre représentatif d'un périmètre de délégation souhaité, lorsque ladite réponse est positive.

4. Procédé de délégation selon la revendication 3, **caractérisé en ce que** ledit agent intelligent a été préalablement sélectionné parmi une pluralité d'agents intelligents candidats, en fonction dudit au moins un paramètre représentatif d'un périmètre de délégation souhaité.

5. Procédé de délégation selon la revendication 3, **caractérisé en ce que** ladite réponse prend la forme d'une confirmation que ladite délégation est réalisable par ledit agent intelligent sur au moins une partie dudit périmètre de délégation souhaité, dite périmètre de délégation applicable, et **en ce que** ladite réponse comprend au moins un paramètre représentatif dudit périmètre de délégation applicable.

6. Procédé de délégation selon la revendication 5, **caractérisé en ce que** ledit établissement du contrat intelligent comprend en outre, préalablement à ladite génération dudit contrat intelligent, lorsque que ledit périmètre de délégation applicable est différent dudit périmètre de délégation souhaité :
- la transmission (204), audit dispositif communicant, d'une demande de confirmation d'établissement d'une délégation de traitement sur ledit périmètre de délégation applicable, ladite demande de confirmation comprenant ledit au moins un paramètre représentatif du périmètre de délégation applicable ;
- la réception (205), en provenance dudit dispositif communicant, d'une réponse à ladite demande de confirmation d'établissement d'une délégation de traitement sur ledit périmètre de délégation applicable.

7. Procédé de délégation selon la revendication 5, **caractérisé en ce que** ledit contrat est généré sur la base dudit au moins un paramètre représentatif du périmètre de délégation applicable.

8. Procédé de délégation selon la revendication 5, **caractérisé en ce que** ledit au moins un paramètre représentatif d'un périmètre de délégation souhaité et ledit au moins un paramètre représentatif d'un périmètre de délégation applicable appartiennent audit groupe de paramètres.

9. Procédé de délégation selon l'une quelconque des revendications précédentes, **caractérisé en ce que** ledit établissement du contrat intelligent comprend en outre l'obtention d'au moins un certificat numérique parmi un certificat numérique associé audit agent intelligent et un certificat numérique associé à audit dispositif communicant, et l'association dudit au moins un certificat numérique audit contrat intelligent.

10. Procédé de délégation selon la revendication 9, **caractérisé en ce qu'**au moins un dudit au moins un certificat numérique est généré par une autorité de certification externe, sur requête dudit composant de contrôle de délégation.

11. Procédé de délégation selon la revendication 9, **caractérisé en ce qu'**au moins un dudit au moins un certificat numérique est un certificat délégué généré par une entité parmi ledit dispositif communicant et ledit agent intelligent pour l'autre entité parmi ledit dispositif communicant et ledit agent intelligent.

12. Procédé de délégation selon l'une quelconque des revendications précédentes, **caractérisé en ce qu'**il comprend, au niveau dudit composant de contrôle de délégation, postérieurement à l'établissement dudit contrat intelligent :
- l'obtention d'au moins un flux de données associé à une communication numérique initialement associée audit dispositif communicant, dite communication numérique courante ;
- la transmission, audit agent intelligent, dudit au moins un flux de données associé à ladite communication numérique courante, pour traitement dudit au moins un flux de données associé à ladite communication numérique courante dans le cadre de ladite délégation ;
- la réception, en provenance dudit agent intelligent, d'au moins une donnée traitée associée audit au moins un flux de données associé à ladite communication numérique courante ;
- la vérification d'une conformité de traitement dudit au moins un flux de données associé à ladite communication numérique courante, en fonction dudit au moins un paramètre représentatif d'une clause associée à ladite délégation.

13. Procédé de délégation selon la revendication 12, **caractérisé en ce qu'**il comprend, lorsque ladite vérification démontre une absence de conformité dudit traitement dudit au moins un flux de données associé à la communication numérique courante, la révocation dudit contrat intelligent.

14. Procédé de délégation selon l'une quelconque des revendications précédentes, **caractérisé en ce qu'**il comprend :
- l'obtention d'au moins une donnée représentative d'un coût cumulé associé à ladite délégation de traitement ;
- lorsque ledit coût cumulé est supérieur à un seuil déterminé, la révocation dudit contrat intelligent, et l'émission, à destination dudit dispositif communicant et/ou dudit agent intelligent, d'un message signifiant la fin de ladite délégation de traitement.

15. Composant de contrôle d'une délégation, à un agent intelligent, d'un traitement d'au moins un flux de données associé à au moins une communication numérique faisant intervenir un dispositif communicant, ledit composant comprenant au moins un processeur configuré pour, préalablement audit traitement, établir un contrat intelligent liant ledit dispositif communicant et ledit agent intelligent pour la mise en œuvre de ladite délégation, ledit contrat intelligent comprenant au moins un paramètre représentatif d'une clause associée à ladite délégation.

16. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon l'une quelconque des revendications 1 à 14, lorsqu'il est exécuté par un ordinateur.
